(19) Europäisches Patentamt

European Patent Office

Office européen des brevets

(11) **EP 4 773 408 A1**

(12) # EUROPEAN PATENT APPLICATION
published in accordance with Art. 153(4) EPC

(43) Date of publication:
**08.07.2026 Bulletin 2026/28**

(21) Application number: **24941262.8**

(22) Date of filing: **16.07.2024**

(51) International Patent Classification (IPC):
**H01M 50/533** (2021.01) **H01M 50/538** (2021.01)
**H01M 50/107** (2021.01)

(52) Cooperative Patent Classification (CPC):
Y02E 60/10; Y02P 70/50

(86) International application number:
**PCT/CN2024/105739**

(87) International publication number:
**WO 2025/245982 (04.12.2025 Gazette 2025/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.05.2024 CN 202410674912**

(71) Applicant: Eve Energy Co., Ltd.
**Huizhou, Guangdong 516006 (CN)**

(72) Inventors:
• **DENG, Leixin**
**Huizhou, Guangdong 516006 (CN)**
• **LIU, Chao**
**Huizhou, Guangdong 516006 (CN)**
• **LI, Yuefei**
**Huizhou, Guangdong 516006 (CN)**
• **SONG, Pengyuan**
**Huizhou, Guangdong 516006 (CN)**

(74) Representative: **Zhu, Puxing**
**Mars Universe IP
c/o Spaces
Mühldorfstraße 8
81671 München (DE)**

(54) **ELECTRODE SHEET, JELLY ROLL, CYLINDRICAL BATTERY AND BATTERY PACK**

(57)    The present disclosure provides an electrode sheet, a winding core, a cylindrical battery, and a battery pack. A plurality of tabs are provided at one side of the electrode sheet at intervals The electrode sheet includes at least two segments in a first direction. Each segment of the at least two segments has at least one of the plurality of tabs. A length of the tab in the first direction is a width of the tab, a length of the tab in a second direction is a height of the tab, and the second direction is perpendicular to the first direction. For the at least one tab located in the same segment, the tab has the same width and the same height. For tabs respectively located in different segments, the tabs have different widths and/or different heights.

FIG. 1

Winding direction

Processed by Luminess, 75001 PARIS (FR)

**EP 4 773 408 A1**

## Description

This application claims priority to Chinese Patent Application No. 202410674912.0, filed with the Chinese Patent Office on May 28, 2024, content of which is incorporated herein by reference in its entirety.

## TECHNICAL FIELD

The present disclosure relates to the field of battery technologies, and more particular to an electrode sheet, a winding core, a cylindrical battery, and a battery pack.

## BACKGROUND

In the related art, a tab of a winding core of a cylindrical battery generally needs to be flattened or roller leveled, thereby achieving the effects of flattening an end portion, preventing scratching of an inner wall of a battery case, collecting current, preventing short circuit, and the like.

## SUMMARY

However, in a process of roller leveling or flattening the tab of the winding core of the cylindrical battery, the tab is prone to overlapping, misalignment, and the like, resulting in defects such as a cavity or deformation of the tab.

The present disclosure provides an electrode sheet. A plurality of tabs are provided at one side of the electrode sheet at intervals, and the electrode sheet includes at least two segments in a first direction, each segment having at least one one of the plurality of tabs, a length of the tab in the first direction indicating a width of the tab, a length of the tab in a second direction indicating a height of the tab, and the second direction being perpendicular to the first direction, where for the at least one tab located in the same segment, the tab has the same width and the same height, and for the tabs respectively located in different segments, the tabs have different widths and/or different heights.

The present disclosure further provides a winding core. The winding core is formed by winding the electrode sheet as previously described. Where the first direction is a direction in which the electrode sheet is wound.

The present disclosure further provides a cylindrical battery. The cylindrical battery includes the core as previously described.

The present disclosure further provides a battery pack. The battery pack includes the cylindrical battery as previously described.

Beneficial effects

According to the electrode sheet provided in the present disclosure, the electrode sheet is divided into a plurality of segments, so that the tabs in the same segment have the same width and the same width and the tabs in different segments have different widths and/or different heights. Based on different designs of the widths and the heights of the tabs in the different segments, the requirements of the device performance in the process of roller leveling the tabs can be reduced, and the device can be used to roller level the tabs efficiently and accurately, thereby improving the technical problems of overlapping and misalignment of the tabs in the process of roller leveling the tabs.

## BRIEF DESCRIPTION OF THE DRAWINGS

FIG. 1 is a schematic structural diagram of an electrode sheet according to some embodiments of the present disclosure.
FIG. 2 is a schematic structural diagram of an electrode sheet according to some embodiments of the present disclosure.
FIG. 3 is a schematic structural diagram of an electrode sheet according to some embodiments of the present disclosure.
FIG. 4 is a schematic structural diagram of an electrode sheet according to some embodiments of the present disclosure.
FIG. 5 is a schematic structural diagram of an electrode sheet according to some embodiments of the present disclosure.
FIG. 6 is a schematic structural diagram of an electrode sheet according to some embodiments of the present disclosure.
FIG. 7 is a schematic structural diagram of an electrode sheet according to some embodiments of the present disclosure.
FIG. 8 is a schematic structural diagram of an electrode sheet according to some embodiments of the present disclosure.

REFERENCE NUMERALS OF THE ACCOMPANYING DRAWING:

10. Electrode sheet; 20. Tab; 30. Segment; 40. Beveled edge.

## DETAILED DESCRIPTION

An embodiments of the present disclosure provides an electrode sheet 10. The electrode sheet 10 is wound to form a winding core. A plurality of tabs 20 are provided at one side of the electrode sheet 10 at intervals. The electrode sheet 10 includes at least two segments 30 in a first direction. Each segment 30 of the at least two segments 30 has at least one one 20 of the plurality of tabs 20. A length of the tab 20 in the first direction is a width of the tab 20, and a length of the tab 20 in a second direction is a height of the tab 20. Where for the at least one tab 20 located in the same segment 30, the tab 20 has the same width and the same height. For the tabs 20 respectively located in different segments 30, the tabs 20 have different widths and/or different heights.

In the present embodiment, the electrode sheet 10 is divided into the plurality of segments 30, so that the tabs 20 in the same segment 30 have the same width and the same width and the tabs 20 in different segments 30 have different widths and/or different heights. Based on different designs of the widths and the heights of the tabs 20 in the different segments 30, the requirements of the device performance in the process of roller leveling the tabs 20 can be reduced, and the device can be used to roller level the tabs 20 efficiently and accurately, thereby improving the technical problems of overlapping and misalignment of the tabs 20 in the process of roller leveling the tabs 20.

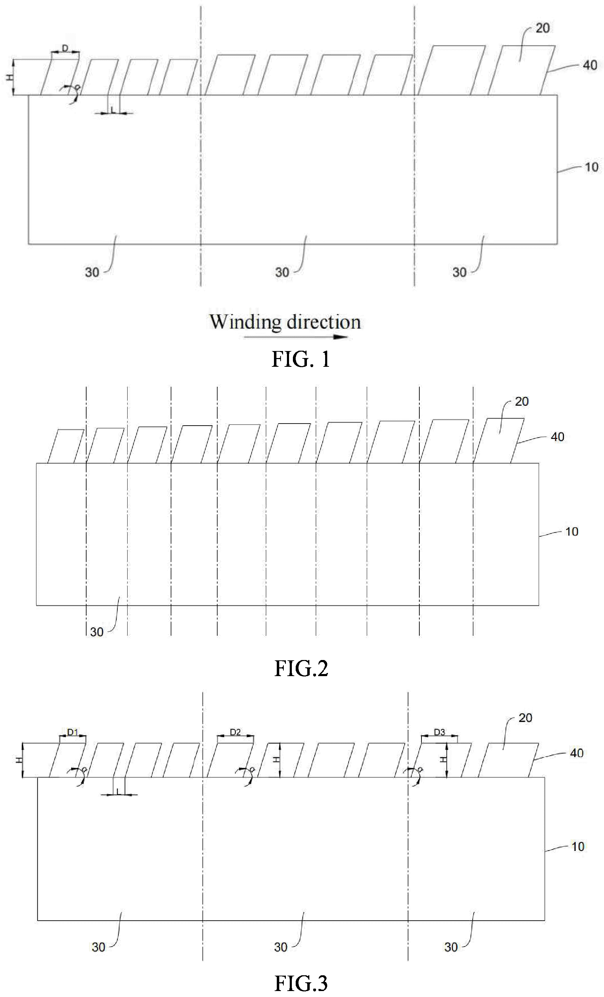

As shown in FIG. 1, the electrode sheet 10 may be divided into a number of segments 30, such that each segment 30 of the plurality of segments 30 has several tabs 20. For example, there are four tabs 20, ten tabs 20, fifty tabs 20, one hundred tabs 20, etc., within each segment 30. It should be understood for a segment 30 having a certain length that the greater the number of tabs 20 in the segment 30, the more toroidal an end face structure that the tabs 20 can form after folded, and it is more advantageous to improve the problem of overlapping and misalignment of the tabs 20 upon roller leveling, thereby facilitating the elevation of the end face flatness. However, the more the number of the tabs 20 is, the more times the tabs 20 are cut in a process of manufacturing the tabs 20, and the more times the tabs 20 are folded, and formed difficulty is increased. At the same time, an increase in the number of cuts causes a decrease in the production efficiency and an increase in the metal debris, which may result in an increase in the defective rate of the battery. Therefore, the number of the tabs 20 contained in each segment 30 can be reasonably selected according to a current manufacturing process level and a preset manufacturing cost, so that the production process and the defect rate are balanced and the optimal production mode is ensured.

For the at least one tab 20 located in the same segment 30, each tab 20 has the same width and the same height. That is, any two tabs 20 in the same segment 30 have the same width and the same height. For tabs 20 respectively located in different segments 30, the tabs 20 have different widths and/or different heights. That is, any two tabs 20 respectively located in the different segments 30 have different widths and/or different heights.

As shown in FIG. 2, the electrode sheet 10 may be divided into a plurality of segments 30, so that each segment 30 of the plurality of segments 30 has only one tab 20.

Since the electrode sheet 10 is wound to form a winding core, the electrode sheet 10 is mainly used in a cylindrical battery. The electrode sheet 10 may be a positive electrode sheet or a negative electrode sheet. Correspondingly, the tab 20 may be a positive tab or a negative tab.

Where, the first direction may be a winding direction in which the electrode sheet 10 is wound to form the winding core. The winding direction is a direction in which the electrode sheet 10 is gradually wound to form the winding core. In a process of winding the electrode sheet 10, a radius of the formed winding core is gradually increased. A direction perpendicular to the winding direction is a width direction of the electrode sheet 10 or a height direction of the formed winding core.

It should be understood for the tabs 20 respectively located in the different segments 30 that the tabs 20 may have different widths and the same height. Alternatively, the tabs 20 may have different heights and the same width. Alternatively, the tabs 20 may have different widths and different heights.

In some embodiments, the widths and heights of the tabs 20 respectively located in the different segments 30 are gradually increased in the winding direction. As a result, inner sides of the tabs 20 are substantially flush with each other after the tabs 20 being bent. It should be understood that each tab 20 is bent toward a center direction of the winding core, and the radius of the winding core may be increased as the electrode sheet 10 is gradually wound. A tab 20 being in the larger radius position of the winding core requires a longer distance after the tab 20 being bent to enable the inner side of the tab 20 to be flush with the inner side of another tab 20 being in the smaller radius position of the winding core. As a result, the heights of the tabs 20 respectively located in the different segments 30 are gradually increased to compensate for a position offset caused by the increase in the radius of the winding core and to ensure that the inner sides of the tabs 20 are substantially flush with each other. As a result, each of the tabs 20 is substantially formed in a cylindrical structure of a circular ring after being bent.

In some embodiments, the electrode sheet 10 has only one tab 20 within each segment 30 in the winding direction, and the widths and heights of the tabs 20 of the electrode sheet 10 are gradually increased in the winding direction. As a result, inner sides of the tabs 20 are substantially flush with each other after the tabs 20 being bent.

In some embodiments, the widths and heights of the tabs 20 respectively located in the different segments 30 may be changed irregularly in the winding direction. For example, the widths and heights of the tabs 20 respectively located in the different segments 30 may be firstly increased and then decreased, or firstly decreased and then increased, etc. Even if the widths and the heights of the tabs 20 are changed irregularly, it is also possible to reduce overlapping and interference of the tabs 20 with each other.

For all the tabs 20, the tabs 20 are provided at intervals. As shown in FIG. 1, a spacing between every two adjacent ones of the tabs 20 is L.

In some embodiments, for tabs 20 within the same segment 30, a spacing between every two adjacent ones of the tabs 20 is the same as each other. For the tabs 20 respectively located in different segments 30, the spacing between every two adjacent ones of the tabs 20 is different from each other.

In some embodiments, for all the tabs 20 of the electrode sheet 10, a spacing between every two adjacent ones of the tabs 20 is the same as each other.

In some embodiments, for all the tabs 20 of the electrode sheet 10, a spacing between every two adjacent ones of the tabs 20 is different from each other.

Where, $0 < L \leq 2$ mm. For example, L may be 0.05 mm, 0.1 mm, 0.2 mm, 0.5 mm, 1 mm, 1.8 mm, 2 mm, or any numerical value between any two of the above values.

In some embodiments, the tab 20 is a component formed by performing a die cutting process or a laser cutting process on the electrode sheet 10. For tabs 20 having different heights or widths, respective cutting parameters can be adjusted during die cutting or laser cutting of the electrode sheet 10.

In some embodiments, a shape of the tab 20 is set as a parallelogram including two oppositely disposed beveled edges 40, where either of the beveled edges 40 is disposed at an included angle with the electrode sheet 10. For a tab 20 in the same segment 30, either of the beveled edges 40 of the tab 20 is disposed at the same included angle with the electrode sheet 10, and for each of tabs 20 respectively located in different segments 30, either of the beveled edges 40 of the each of the tabs 20 is at the same included angle or different angle with the electrode sheet 10.

Based on setting the shape of the tab 20 as the parallelogram, die-cutting molding of the tab 20 can be facilitated. In addition, it is possible to reduce the degree of deformation of tabs 20 when the tabs 20 are bent, and to improve the flatness and uniformity of an end face of the tabs 20. In combination with the width design and height design of the tabs 20, the requirements of the tabs 20 on the device in a roller leveling process are reduced, and the forming effect of the end face of the tabs 20 is improved.

In a process of die cutting the electrode sheet 10 to form the tab 20, the electrode sheet 10 is in a state of continuous horizontal movement. Due to a relative movement of the electrode sheet 10 with respect to the cut laser light, the laser light can cut the electrode sheet 10 directly to obtain a beveled edge 40. As a result, the forming of the electrode sheet 10 is facilitated, which makes the forming process of the electrode sheet 10 simpler.

Since the tab 20 has a shape of a parallelogram, the beveled edge 40 of the tab 20 is disposed at an angle with a side edge of the electrode sheet 10. For a tab 20 in the same segment 30, an included angle between the beveled edge 40 of the tab and the electrode sheet 10 is the same as each other. That is, an included angle between the beveled edge 40 of each of all the tabs 20 located in the same segment 30 and the electrode sheet 10 is the same as each other. In addition, all the tabs 20 located in the same segment 30 have the same height and the same width, and it can be seen that all the tabs 20 located in the same segment 30 have the same shape.

In some embodiments, for tabs 20 respectively located in different segments 30, an included angle between the beveled edge 40 of each of the tabs 20 and the electrode sheet 10 is different from each other. Specifically, the included angle between the beveled edge 40 of the each of the tabs 20 and the electrode sheet 10 is gradually increased in the winding direction.

In some embodiments, for tabs 20 respectively located in different segments 30, an included angle between the beveled edge 40 of each of the tabs 20 and the electrode sheet 10 is the same as each other.

Based on the shape design of the tabs 20 in each segment 30 and the change in the angle between the beveled edge 40 and the electrode sheet 10, it is possible to make the end face of the tabs 20 more flat after the tabs 20 being bent. Each of the tabs 20 can be enclosed to substantially form a cylindrical structure of a circular ring after being bent. Meanwhile, cases of overlapping and interference of the tabs 20 can be reduced, the degree of deformation of the tabs 20 caused by excessive internal stress in a bending process of the tabs 20 can be reduced, and the flatness and uniformity of the end face of the tabs 20 can be improved.

It should be understood based on the shape of the tab 20 being the parallelogram that, for the tabs 20 in the same segment 30, the tabs 20 have the same width and the same height, and an included angle between the beveled edge 40 of each of the tabs 20 and the electrode sheet 10 is the same as each other. For the tabs 20 respectively located in the different segments 30, the tabs 20 have different widths and/or different heights, and the included angle between the beveled edge 40 of each of the tabs 20 and the electrode sheet 10 is the same as each other or different from each other. The tabs 20 on the electrode sheet 10 have several forms, respectively, as follows.

Form 1: as shown in FIG. 3, for the tabs 20 in the same segment 30, the tabs 20 have the same width and the same height, and the included angle between the beveled edge 40 of each of the tabs 20 and the electrode sheet 10 is the same as each other. For the tabs 20 respectively located in the different segments 30, the tabs 20 have different widths, i.e., $D_1$, $D_2$, $D_3$...$D_n$. The tabs 20 respectively located in the different segments 30 have the same height, i.e., H. The included angle between the beveled edge 40 of each of the tabs 20 respectively located in the different segments 30 and the electrode sheet 10 is the same, i.e., $\alpha$.

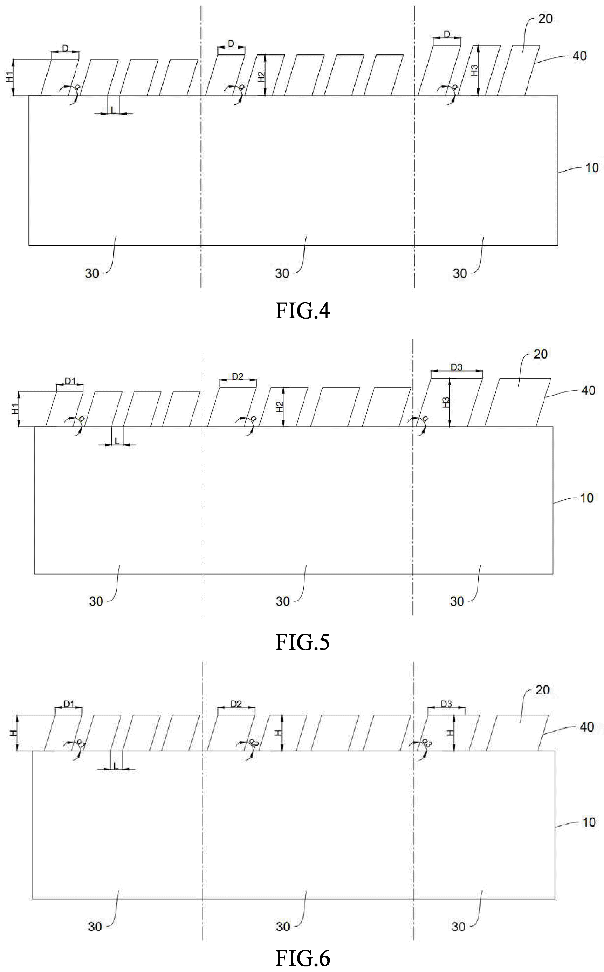

Form 2: as shown in FIG. 4, for the tabs 20 in the same segment 30, the tabs 20 have the same width and the same height, and the included angle between the beveled edge 40 of each of the tabs 20 and the electrode sheet 10 is the same as each other. For the tabs 20 respectively located in the different segments 30, the tabs 20 have the same width, i.e., D. The tabs 20 respectively located in the different segments 30 have different heights, i.e., $H_1$, $H_2$, $H_3$...$H_n$. The included angle between the beveled edge 40 of each of the tabs 20 respectively located in the different segments 30 and the electrode sheet 10 is the same, i.e., $\alpha$.

Form 3: as shown in FIG. 5, for the tabs 20 in the same segment 30, the tabs 20 have the same width and the same height, and the included angle between the beveled edge 40 of each of the tabs 20 and the electrode sheet 10 is the same as each other. For the tabs 20 respectively located in the different segments 30, the tabs 20 have different widths, i.e., $D_1$, $D_2$, $D_3$...$D_n$. The tabs 20 respectively located in the different segments 30 have different heights, i.e., $H_1$, $H_2$, $H_3$...$H_n$. The included angle between the beveled edge 40 of each of the tabs 20 respectively located in the different segments 30 and the electrode sheet 10 is the same, i.e., $\alpha$.

Form 4: as shown in FIG. 6, for the tabs 20 in the same segment 30, the tabs 20 have the same width and the same height, and the included angle between the beveled edge 40 of each of the tabs 20 and the electrode sheet 10 is the same as each other. For the tabs 20 respectively located in the different segments 30, the tabs 20 have different widths, i.e., $D_1$, $D_2$, $D_3$...$D_n$. The tabs 20 respectively located in the different segments 30 have the same height, i.e., H. The included angle between the beveled edge 40 of each of the tabs 20 respectively located in the different segments 30 and the electrode sheet 10 is different, i.e., $\alpha_1$, $\alpha_2$, $\alpha_3$,...$\alpha_n$.

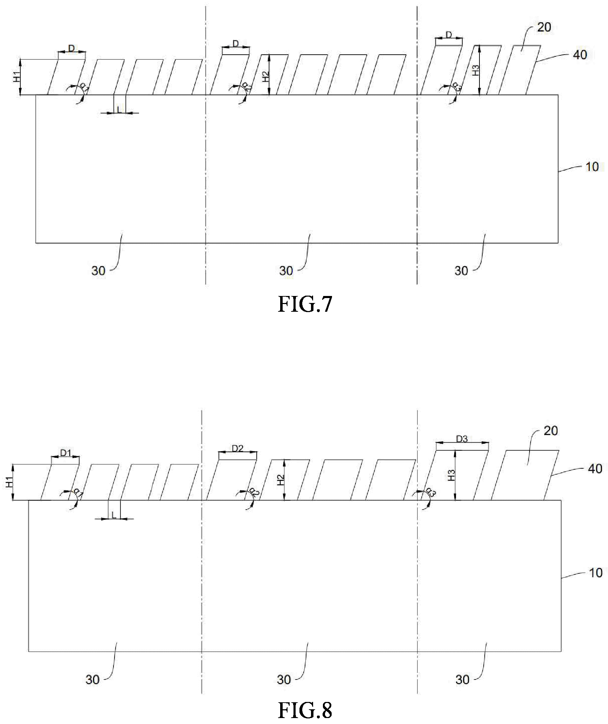

Form 5: as shown in FIG. 7, for the tabs 20 in the same segment 30, the tabs 20 have the same width and the same height, and the included angle between the beveled edge 40 of each of the tabs 20 and the electrode sheet 10 is the same as each other. For the tabs 20 respectively located in the different segments 30, the tabs 20 have the same width, i.e., D. The tabs 20 respectively located in the different segments 30 have different heights, i.e., $H_1$, $H_2$, $H_3$...$H_n$. The included angle between the beveled edge 40 of each of the tabs 20 respectively located in the different segments 30 and the electrode sheet 10 is different, i.e., $\alpha_1$, $\alpha_2$, $\alpha_3$,...$\alpha_n$.

Form 6: as shown in FIG. 8, for the tabs 20 in the same segment 30, the tabs 20 have the same width and the same height, and the included angle between the beveled edge 40 of each of the tabs 20 and the electrode sheet 10 is the same as each other. For the tabs 20 respectively located in the different segments 30, the tabs 20 have different widths, i.e., $D_1$, $D_2$, $D_3$...$D_n$. The tabs 20 respectively located in the different segments 30 have different heights, i.e., $H_1$, $H_2$, $H_3$...$H_n$. The included angle between the beveled edge 40 of each of the tabs 20 respectively located in the different segments 30 and the electrode sheet 10 is different, i.e., $\alpha_1$, $\alpha_2$, $\alpha_3$,...$\alpha_n$.

Where, the number of the tabs 20 in each segment 30 can be reasonably selected based on different battery models and different production conditions. It should be understood for a segment 30 having a certain length that the greater the number of tabs 20 in the segment 30, the more toroidal an end face structure that the tabs 20 can form after folded, and it is more advantageous to improve the problem of overlapping and misalignment of the tabs 20 upon roller leveling, thereby facilitating the elevation of the end face flatness. However, the more the number of the tabs 20 is, the more times the tabs 20 are cut in a process of manufacturing the tabs 20, and the more times the tabs 20 are folded, and formed difficulty is increased. At the same time, an increase in the number of cuts causes a decrease in the production efficiency and an increase in the metal debris, which may result in an increase in the defective rate of the battery. Therefore, the number of the tabs 20 contained in each segment 30 can be reasonably selected according to a current manufacturing process level and a preset manufacturing cost, so that the production process and the defect rate are balanced and the optimal production mode is ensured.

As shown in FIG. 2, in some embodiments, each segment 30 has only one tab 20, and in the winding direction, the width of the tab 20 is gradually increased, the height of the tab 20 is gradually increased, and the included angle between the beveled edge 40 of the tab 20 and the electrode sheet 10 is gradually increased.

Based on the fact that there is only one tab 20 in each segment 30, the shape of the tab 20 is gradually changed in the winding direction. Specifically, the width of the tab 20 is gradually increased, the height of the tab 20 is gradually increased, and the included angle between the beveled edge 40 of the tab 20 and the electrode sheet 10 is gradually increased.

It should be understood that each tab 20 is bent toward a center direction of the winding core, and the radius of the winding core may be increased as the electrode sheet 10 is gradually wound. A tab 20 being in the larger radius position of the winding core requires a longer distance after the tab 20 being bent to enable the inner side of the tab 20 to be flush with the inner side of another tab 20 being in the smaller radius position of the winding core. As a result, the heights of the tabs 20 in the different segments 30 are gradually increased to compensate for a position offset caused by the increase in the radius of the winding core and to ensure that the inner sides of the tabs 20 are substantially flush with each other. In addition, cases of overlapping and interference of the tabs 20 can be reduced, the degree of deformation of the tabs 20 caused by excessive internal stress in a bending process of the tabs 20 can be reduced, and the flatness and uniformity of the end face of the tabs 20 can be improved.

The present embodiment provides a winding core. The winding core is formed by winding the electrode sheet. Where the first direction is a direction in which the electrode sheet is wound.

In the present embodiment, the electrode sheet 10 is divided into the plurality of segments 30, so that the tabs 20 in the same segment 30 have the same width and the same width and the tabs 20 in different segments 30 have different widths and/or different heights. Based on different designs of the widths and the heights of the tabs 20 in the different segments 30, the requirements of the device performance in the process of roller leveling the tabs 20 can be reduced, and the device can be used to roller level the tabs 20 efficiently and accurately, thereby improving the technical problems of overlapping and misalignment of the tabs 20 in the process of roller leveling the tabs 20.

In some embodiments, the width of the tab 20 is positively related to a radius of the winding core corresponding to a position of the tab 20 on the winding core.

It should be understood that the radius of the winding core may be increased as the electrode sheet 10 is gradually wound to form the winding core. If the width of the tab 20 being in a larger radius position is the same as the width of the tab 20 being in a smaller radius, the number of the tabs 20 in the circumference of the winding core corresponding to the larger radius position may be more. The more the number of the tabs 20 is, the more times the tabs 20 are cut in a process of manufacturing, and the more times the tabs 20 are folded, and formed difficulty is increased. Meanwhile, an increase in the number of cuts causes a decrease in the production efficiency and an increase in the metal debris, which may result in an increase in the defective rate of the battery. As a result, the width of the tab 20 is positively related to a radius of the winding core corresponding to a position of the tab 20 on the winding core, so that the width of the tab 20 being in a smaller radius position can be made smaller, and the width of the tab 20 being in a larger radius position can be made larger. Accordingly, the widths of the tabs 20 being in different radius positions of the winding core are reasonably arranged, so as to reduce the cutting difficulty and folding difficulty of the tabs 20, reduce the possibility of the occurrence of metal debris in the battery, and reduce the defect rate of the battery.

In some embodiments, the width of the tab 20 is D, and the radius of the winding core corresponding to the position of the tab 20 on the winding core is R.

A relationship between D and R satisfies:

$$D = A \times \sqrt{R}$$

Where, A is a constant.

For example, when the radius R of the winding core corresponding to the position of the tab 20 on the winding core is 3 mm and A=0.9, the width of the tab 20 is D=1.56 mm. For example, when the radius R of the winding core corresponding to the position of the tab 20 on the winding core is 5 mm and A=1.1, the width of the tab 20 is D=2.46 mm. For example, when the radius R of the winding core corresponding to the position of the tab 20 on the winding core is 8 mm and A=1.6, the width of the tab 20 is D=4.52 mm.

Where, A is a constant and affected by the material and thickness of the electrode sheet 10. For example, when the electrode sheet 10 is a copper foil and the thickness of the copper foil is 8 $\mu$m, A is in a range of $0.5 \leq A \leq 2$. For example, A is 0.5, 1, 1.5, 2, or any numerical value between any two of the above values. For example, when the electrode sheet 10 is an aluminum foil and the thickness of the aluminum foil is 12 $\mu$m, A is in a range of $0.5 \leq A \leq 2$. For example, A is 0.5, 1, 1.5, 2, or any numerical value between any two of the above values.

Both opposite sides of the electrode sheet 10 in the winding direction of the electrode sheet 10 are provided with non-tab 20 regions, so that the tabs 20 are only provided at some radius positions of the winding core. Generally, the radius R of the tab 20 corresponding to the position of the tab 20 on the winding core is in a range of 3 mm $\leq$ R $\leq$ 8.5 mm.

In some embodiments, the height of the tab 20 is positively related to a radius of the winding core corresponding to a position of the tab 20 on the winding core.

It should be understood that the radius of the winding core may be increased as the electrode sheet 10 is gradually wound to form the winding core. A tab 20 being in the larger radius position of the winding core requires a longer distance after the tab 20 being bent to enable the inner side of the tab 20 to be flush with the inner side of another tab 20 being in the smaller radius position of the winding core. As a result, the height of the tab 20 is positively related to a radius of the winding core corresponding to a position of the tab 20 on the winding core, so that the height of the tab 20 being in a smaller radius position can be made smaller, and the height of the tab 20 being in a larger radius position can be made larger, so as to ensure that the inner sides of the tabs 20 are substantially flush with each other. As a result, each of the tabs 20 is substantially formed in a cylindrical structure of a circular ring after being bent.

In some embodiments, the height of the tab 20 is H, and the radius of the winding core corresponding to a position of tab 20 on the winding core is R.

A relationship between H and R satisfies:

$$H = B \times \sqrt[3]{R} - \frac{15(d_1 + 2d_2)}{2} \ .$$

Where B is a constant, $d_1$ is a thickness of the electrode sheet 10, and $d_2$ is a thickness of a separator.

Where, the thickness $d_1$ of the electrode sheet 10 is in a range of 0.008 mm $\leq d_1 \leq$ 0.02 mm. The thickness $d_2$ of the separator is in a range of 0.05 mm $\leq d_2 \leq$ 0.4 mm.

For example, the thickness of the electrode sheet 10 is $d_1$=0.01 mm, and the thickness of the separator is $d_2$=0.1 mm. When the radius R of the winding core corresponding to the position of the tab 20 on the winding core is 3 mm and B=2.5, the height of the tab 20 is H=2.03 mm. When the radius R of the winding core corresponding to the position of the tab 20 on the winding core is 5 mm and B=2.2, the height of the tab 20 is H=2.19 mm. When the radius R of the winding core corresponding to the position of the tab 20 on the winding core is 8 mm and B=2, the height of the tab 20 is H=2.43 mm.

Where, B is a constant and affected by the material and thickness of the electrode sheet 10. For example, when the electrode sheet 10 is a copper foil and the thickness of the copper foil is 8 $\mu$m, B is in a range of 1≤B≤3. For example, B is 1, 2, 3, or any numerical value between any two of the above values. For example, when the electrode sheet 10 is an aluminum foil and the thickness of the aluminum foil is 12 $\mu$m, B is in a range of 1≤B≤3. For example, B is 1, 2, 3, or any numerical value between any two of the above values.

In some embodiments, the included angle between the beveled edge 40 of the tab 20 and the electrode sheet 10 is positively related to a radius of the winding core corresponding to a position of the tab 20 on the winding core.

It should be understood that the included angle between the beveled edge 40 of the tab 20 being in a smaller radius position and the electrode sheet 10 is smaller, and the included angle between the beveled edge 40 of the tab 20 being in a larger radius position and the electrode sheet 10 is larger. That is, in the direction of winding, the shape of the tab 20 may gradually approach a rectangle.

In some embodiments, the width of the tab 20 is D, the included angle between the beveled edge 40 and the electrode sheet 10 is $\alpha$, and the radius of the winding core corresponding to the position of the tab 20 on the winding core is R.

A relationship between D, $\alpha$, and R satisfies:

$$\alpha = 90 - C \times \frac{180 \cdot D}{\pi \cdot R}.$$

Where, C is a constant.

A method for calculating the width D of the tab also uses $D = A \times \sqrt{R}$.

For example, when the radius R of the winding core corresponding to the position of the tab 20 on the winding core is 3 mm, A=0.9, and C=1, the included angle between the beveled edge 40 and the electrode sheet 10 is $\alpha$=60.2°. For example, when the radius R of the winding core corresponding to the position of the tab 20 on the winding core is 5 mm, A=1.1, and C=0.8, the included angle between the beveled edge 40 and the electrode sheet 10 is $\alpha$=67.4°. For example, when the radius R of the winding core corresponding to the position of the tab 20 on the winding core is 8 mm, A=1.6, and C=0.4, the included angle between the beveled edge 40 and the electrode sheet 10 is $\alpha$=77°.

Where, C is a constant and affected by the material and thickness of the electrode sheet 10. For example, when the electrode sheet 10 is a copper foil and the thickness of the copper foil is 8 $\mu$m, C is in a range of 0.1≤C≤2. For example, C is 0.1, 0.5, 1, 2, or any numerical value between any two of the above values. For example, when the electrode sheet 10 is an aluminum foil and the thickness of the aluminum foil is 12 $\mu$m, C is in a range of 0.1≤C≤2. For example, C is 0.1, 0.5, 1, 2, or any numerical value between any two of the above values.

In some embodiments, each segment 30 has at least two tabs 20, and for the tabs 20 in the same segment 30, the width and the height of each of all the tabs 20 in the segment 30 and the included angle between the beveled edge 40 of the tab 20 and the electrode sheet 10 are calculated from a radius of the winding core corresponding to a position of a tab 20 located at an intermediate position of the segment 30 on the winding core.

It should be understood that, based on each segment 30 having at least two tabs 20, after the segment 30 is wound, the tabs 20 on the segment 30 may be in different radius positions of the winding core. If the width and the height of each of the tabs 20 and the included angle between the beveled edge 40 of the tab 20 and the electrode sheet 10 are calculated from respective radius of the winding core corresponding to a position of the tab 20 on the winding core, the width and the height of the tab 20 in the segment 30 and the included angle between the beveled edge 40 and the electrode sheet 10 may be inconsistent. As a result, the width and the height of each of all the tabs 20 in the segment 30 and the included angle between the beveled edge 40 of the tab 20 and the electrode sheet 10 are calculated by selecting a tab 20 at an intermediate position of the segment 30 as a reference.

In some embodiments, each segment 30 includes an odd number of tabs 20, and the width and the height of each of all the tabs 20 in the segment 30 and the included angle between the beveled edge 40 of the tab 20 and the electrode sheet 10 are calculated by directly selecting a radius of the winding core corresponding to a position of a tab 20 located at an intermediate position of the segment 30 on the winding core as a reference.

For example, if each segment 30 includes 11 tabs 20, and the width and the height of each of all the tabs 20 in the segment 30 and the included angle between the beveled edge 40 of the tab 20 and the electrode sheet 10 are calculated by selecting a radius of the winding core corresponding to a position of sixth tab 20 on the winding core as a reference. For example, if each segment 30 includes 101 tabs 20, and the width and the height of each of all the tabs 20 in the segment 30 and the included angle between the beveled edge 40 of the tab 20 and the electrode sheet 10 are calculated by selecting a radius of the winding core corresponding to a position of 51st tab 20 on the winding core as a reference.

In some embodiments, each segment 30 includes an even number of tabs 20, and the width and the height of each of all the tabs 20 in the segment 30 and the included angle between the beveled edge 40 of the tab 20 and the electrode sheet 10 are calculated by directly selecting a radius of the winding core corresponding to a position of either of two tabs 20 located at an intermediate position of the segment 30 on the winding core as a reference. It should be understood that the radius of the winding core corresponding to the position of either of the two tabs 20 located at the intermediate position does not differ much or is even the same as each other. Thus, selecting any one as a reference may also substantially reflect an average of the radiuses corresponding to the positions of all the tabs 20 in the segment 30 on the winding core.

For example, if each segment 30 includes 10 tabs 20, and the width and the height of each of all the tabs 20 in the segment 30 and the included angle between the beveled edge 40 of the tab 20 and the electrode sheet 10 are calculated by selecting a radius of the winding core corresponding to a position of fifth tab 20 or sixth tab 20 on the winding core as a reference. For example, if each segment 30 includes 100 tabs 20, and the width and the height of each of all the tabs 20 in the segment 30 and the included angle between the beveled edge 40 of the tab 20 and the electrode sheet 10 are calculated by selecting a radius of the winding core corresponding to a position of 50th tab 20 or 51st tab 20 on the winding core as a reference.

The present embodiment provides a cylindrical battery. The cylindrical cell includes an electrode sheet 10.

In the present embodiment, the electrode sheet 10 is divided into the plurality of segments 30, so that the tabs 20 in the same segment 30 have the same width and the same width and the tabs 20 in different segments 30 have different widths and/or different heights. Based on different designs of the widths and the heights of the tabs 20 in the different segments 30, the requirements of the device performance in the process of roller leveling the tabs 20 can be reduced, and the device can be used to roller level the tabs 20 efficiently and accurately, thereby improving the technical problems of overlapping and misalignment of the tabs 20 in the process of roller leveling the tabs 20.

The present embodiment provides a battery pack. The battery pack includes the cylindrical battery.

In the present embodiment, the electrode sheet 10 is divided into the plurality of segments 30, so that the tabs 20 in the same segment 30 have the same width and the same width and the tabs 20 in different segments 30 have different widths and/or different heights. Based on different designs of the widths and the heights of the tabs 20 in the different segments 30, the requirements of the device performance in the process of roller leveling the tabs 20 can be reduced, and the device can be used to roller level the tabs 20 efficiently and accurately, thereby improving the technical problems of overlapping and misalignment of the tabs 20 in the process of roller leveling the tabs 20.

**Claims**

1. An electrode sheet, the electrode sheet being provided with a plurality of tabs at one side of the electrode sheet at intervals and comprising at least two segments in a first direction, each of the at least two segments having at least one of the plurality of tabs, a width of the tab is along the first direction, a height of the tab is along the second direction, and the second direction being perpendicular to the first direction, wherein for tabs located in a same one of the at least two segments, the tabs have same widths and same heights, and for tabs respectively located in different segments of the at least two segments, the tabs have at least one of different widths and different heights.

2. The electrode sheet of claim 1, wherein a shape of the tab is set as a parallelogram comprising two oppositely disposed beveled edges, and wherein either of the beveled edges is disposed at an included angle with the electrode sheet, and for tabs in the same segment, an included angle between the beveled edge of each of the tabs and the electrode sheet is the same as each other.

3. The electrode sheet of claim 2, wherein each of the at least two segments has only one of the plurality of tabs, and in the first direction, the width of the tab is gradually increased, the height of the tab is gradually increased, and the included angle between the beveled edge of the tab and the electrode sheet is gradually increased.

4. A winding core formed by winding the electrode sheet of any of claims 1-3, wherein the first direction is a direction in which the electrode sheet is wound.

5. The winding core of claim 4, wherein the width of the tab is positively related to a radius of the winding core corresponding to a position of the tab on the winding core.

6. The winding core of claim 5, wherein the width of the tab is D, and the radius of the winding core corresponding to the position of the tab on the winding core is R, which satisfy: $D = A \times \sqrt{R}$ ; and wherein, A is a constant.

7. The winding core of any one of claims 4-6, wherein the height of the tab is positively related to a radius of the winding core corresponding to a position of the tab on the winding core.

8. The winding core of claim 7, wherein the height of the tab is H, and the radius of the winding core corresponding to the position of the tab on the winding core is R, which satisfy: $H = B \times \sqrt[3]{R} - \dfrac{15(d_1 + 2d_2)}{2}$ ; and

wherein B is a constant, $d_1$ is a thickness of the electrode sheet, and $d_2$ is a thickness of a separator.

9. The winding core of any one of claims 4-8, wherein an included angle between a beveled edge of the tab and the electrode sheet is positively related to a radius of the winding core corresponding to a position of the tab on the winding core.

10. The winding core of claim 9, wherein the width of the tab is D, the included angle between the beveled edge and the electrode sheet is $\alpha$, and the radius of the winding core corresponding to the position of the tab on the winding core is R, which satisfy:

$\alpha = 90 - C \times \dfrac{180 \cdot D}{\pi \cdot R}$ ; and

wherein, C is a constant.

11. The winding core of any one of claims 4-10, wherein each of the at least two segments has at least two ones of the plurality of tabs, and for the tabs in the same segment, the width and the height of the tabs in the segment and the included angle between the beveled edge of each of the tabs and the electrode sheet are calculated from a radius of the winding core corresponding to a position of a tab located at an intermediate position of the segment on the winding core.

12. A cylindrical battery, comprising: the winding core of any one of claims 5-11.

13. A battery pack, comprising: the cylindrical battery of claim 12.

Winding direction

FIG. 1

FIG.2

FIG.3

FIG.4

FIG.5

FIG.6

FIG.7

FIG.8

## INTERNATIONAL SEARCH REPORT

| | International application No. |
|---|---|
| | **PCT/CN2024/105739** |

| A. | CLASSIFICATION OF SUBJECT MATTER |
|---|---|

H01M50/533(2021.01)i; H01M50/538(2021.01)i; H01M50/107(2021.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, ISI web of science, 读秀, DUXIU: 亿纬锂能, 极耳, 极片, 宽, 高, 斜, 夹角, 角度, 平行四边形, 半径, 直径, lug, width, hight, length, slope, inclin+, angle, parallelogram, radius, diameter

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 219832696 U (AEROSPACE LITHIUM BATTERY TECHNOLOGY (JIANGSU) CO., LTD.) 13 October 2023 (2023-10-13)<br>description, paragraphs 29-31, 34 and 38, and figures 2-3 | 1-2, 4, 7, 12-13 |
| X | CN 114759317 A (GUANGZHOU XIAOPENG MOTORS TECHNOLOGY CO., LTD.) 15 July 2022 (2022-07-15)<br>description, paragraphs 41, 47 and 50 | 1, 4-5, 7, 12 |
| Y | CN 219832696 U (AEROSPACE LITHIUM BATTERY TECHNOLOGY (JIANGSU) CO., LTD.) 13 October 2023 (2023-10-13)<br>description, paragraphs 29-31, 34 and 38, and figures 2-3 | 3, 9, 11 |
| Y | CN 114759317 A (GUANGZHOU XIAOPENG MOTORS TECHNOLOGY CO., LTD.) 15 July 2022 (2022-07-15)<br>description, paragraphs 41, 47 and 50 | 3, 9, 11 |
| A | CN 220138391 U (SUNWODA POWER TECHNOLOGY CO., LTD.) 05 December 2023 (2023-12-05)<br>entire document | 1-13 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 October 2024** | **16 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/105739** |

### C.    DOCUMENTS CONSIDERED TO BE RELEVANT

| Category* | Citation of document, with indication, where appropriate, of the relevant passages | Relevant to claim No. |
|---|---|---|
| A | CN 116632315 A (DONGGUAN K-TECH NEW ENERGY CO., LTD.) 22 August 2023 (2023-08-22)<br>entire document | 1-13 |
| A | CN 219717200 U (HUIZHOU EVE ENERGY CO., LTD.) 19 September 2023 (2023-09-19)<br>entire document | 1-13 |
| A | WO 2024050697 A1 (CONTEMPORARY AMPEREX TECHNOLOGY CO., LTD.) 14 March 2024 (2024-03-14)<br>entire document | 1-13 |

**INTERNATIONAL SEARCH REPORT**
Information on patent family members

International application No.

**PCT/CN2024/105739**

| Patent document cited in search report | | | Publication date (day/month/year) | Patent family member(s) | | | Publication date (day/month/year) |
|---|---|---|---|---|---|---|---|
| CN | 219832696 | U | 13 October 2023 | None | | | |
| CN | 114759317 | A | 15 July 2022 | CN | 114759317 | B | 03 September 2024 |
| CN | 220138391 | U | 05 December 2023 | None | | | |
| CN | 116632315 | A | 22 August 2023 | CN | 220209010 | U | 19 December 2023 |
| CN | 219717200 | U | 19 September 2023 | None | | | |
| WO | 2024050697 | A1 | 14 March 2024 | None | | | |

Form PCT/ISA/210 (patent family annex) (July 2022)

**EP 4 773 408 A1**

## REFERENCES CITED IN THE DESCRIPTION

**Patent documents cited in the description**

- CN 202410674912